# EUROPÄISCHE PATENTSCHRIFT

(11) **EP 3 655 603 B1**
(45) Veröffentlichungstag und Bekanntmachung des Hinweises auf die Patenterteilung: **18.08.2021**
(21) Anmeldenummer: 18750336.2
(22) Anmeldetag: 11.07.2018
(51) Int. Cl.: E05B 77/36, E05B 15/10, E05C 5/02, E05B 17/00, E05B 83/34, B60K 15/05

(54) **VERRIEGELUNGSEINRICHTUNG FÜR TANK- ODER LADEMULDEN UND TANK- ODER LADEMULDE**
LOCK DEVICE FOR FUEL INLET OR CHARGING BAY AND FUEL INLET OR CHARGING BAY
SERRURE POUR ENTRÉE DE CARBURANT OU SOCLE DE CHARGEMENT ET ENTRÉE DE CARBURANT OU SOCLE DE CHARGEMENT

(30) Priorität: 19.07.2017 DE 102017116230
(43) Veröffentlichungstag der Anmeldung: 27.05.2020
(73) Patentinhaber: Dr. Schneider Kunststoffwerke GmbH, 96317 Kronach (DE); Cebi Italy S.p. A. Ancona, 60027 Osimo Stazione (IT)
(72) Erfinder: WERNER, Stephan, 96224 Burgkunstadt (DE)
(74) Vertreter: Pröll, Jürgen
(86) Internationale Anmeldenummer: PCT/EP2018/068791
(87) Internationale Veröffentlichungsnummer: WO 2019/016044

(56) Entgegenhaltungen:
- WO-A1-2008/059543
- DE-A1- 10 148 199
- US-A- 2 439 057

## Beschreibung

Es werden eine Verriegelungseinrichtung für Tank- oder Lademulden und eine Tank- oder Lademulde beschrieben, wobei die Verriegelungseinrichtung einen Verriegelungsstift aufweist, der an einem Ende einen Verriegelungsabschnitt aufweist und zur Verriegelung translatorisch und rotatorisch bewegbar ist.

Ein Verriegelungsstift wird in dem betreffenden technischen Gebiet häufig auch als Pin oder Verriegelungspin bezeichnet. Daher können die Begriffe Verriegelungsstift und Verriegelungspin als Synonyme verwendet werden und bezeichnen im Folgenden gleiche Teile.

Solche Verriegelungseinrichtungen sind oftmals Bestandteil einer Zentralverriegelungseinheit für Tank- und Lademulden. Der Verriegelungsstift oder -pin kann eine Nut aufweisen, welche so ausgebildet ist, dass bei einer Verlagerung des Verriegelungsstifts dieser verdreht wird. Dementsprechend wird der Verriegelungsabschnitt verdreht und ein Hebelarm freigegeben, der anschließend verschwenkt wird oder verschwenkt werden kann. Das Verfahren des Verriegelungsstifts kann mittels einer Feder und eines sogenannten "Push-Push"-Mechanismus oder elektrisch erfolgen. Das Freigeben der translatorischen und der rotatorischen Bewegung des Verriegelungspins kann auch elektrisch erfolgen, wobei anschließend der Verriegelungsstift über die Feder nach außen gedrückt und aufgrund der Führungsnut verdreht und verlagert wird. Das Verdrehen des Verriegelungsstifts und des Verriegelungsabschnitts bewirkt ein Freigeben eines Hebelarms, der anschließend verschwenkt wird. Um die Tank- oder Lademulde wieder zu verschließen, kann der Hebelarm zurückverschwenkt und gegen den Verriegelungsstift gedrückt werden. Hierbei kommt es ebenfalls zu einem Verdrehen des Verriegelungsstifts, welcher gegen die Kraft der Feder bei seiner Längsverlagerung zusätzlich verdreht wird. Das Verdrehen bewirkt ein Hintergreifen einer Rasteinrichtung am Hebelarm.

Nachdem der Verriegelungsstift eine definierte Position eingenommen hat, kann beispielsweise ein Führungselement einen Abschnitt der Führungsnut hintergreifen, sodass der Verriegelungsstift in seiner verrasteten Stellung aufgenommen und der Hebelarm verriegelt ist.

Der Hebelarm kann einen Deckel aufweisen oder als Tankdeckel ausgebildet sein. Damit ein selbstständiges Öffnen des Hebelarms nach dem Freigeben über den Verriegelungsstift erfolgt, kann der Hebelarm in der verriegelten und geschlossenen Stellung über eine weitere Feder gespannt sein.

### Stand der Technik

Aus dem Stand der Technik sind verschiedene derartige Verriegelungseinrichtungen für Tank- oder Lademulden bekannt. Bei solchen Tank- oder Lademulden kann es aufgrund der Toleranzen der verschiedenen Bestandteile dazu kommen, dass der Hebelarm mit Spiel über eine Verriegelungseinrichtung in der geschlossenen Stellung gehalten ist. Während der Fahrt kann es daher zu einem Klappern kommen, was unerwünscht ist.

Ein häufiges Betätigen der Verriegelungseinrichtung und Öffnen der Tank- oder Lademulde kann diesen Zustand weiter verschlechtern.

Um einen Toleranzausgleich zur Hebelarmschnittstelle bei solchen Tank- oder Lademodulen bereitzustellen ist es bereits angegeben worden, an einem Endabschnitt eines Verriegelungsstifts eine pilzförmige Weichkomponente anzuordnen. Durch die translatorische und rotatorische Bewegung des Verriegelungsstifts bei Betätigung der Verriegelungseinrichtung kommt es zu einem starken Verschleiß der Weichkomponente. Ein Toleranzausgleich kann daher nicht mehr gewährleistet werden und eine Tankklappe im Fahrbetrieb klappern. Insbesondere bei Fahrzeugen, die eine Ladesteckdose aufweisen, kommt es relativ bald zu einem Verschleiß und damit zu keinem Toleranzausgleich mehr, da hier ein erhöhter Betätigungszyklus vorliegt. Aufgrund der Verdrehung und der Linearbewegung des Verriegelungsstifts bei Betätigung unterliegen sämtliche aus dem Stand der Technik bekannten Toleranzausgleichsvorrichtungen einem hohen Verschleiß. Insbesondere Elemente aus einem relativ weichen Material verschleißen bald.

Ein Toleranzausgleich kann daher mit den aus dem Stand der Technik bekannten Einrichtungen nicht für einen langen Zeitraum mit einem im Wesentlichen gleichbleibenden Toleranzausgleich bereitgestellt werden. Insbesondere bei einer häufigen Betätigung kommt es relativ bald zu einem Verschleiß und es kann kein Toleranzausgleich mehr bereitgestellt werden.

DE 101 48 199 A1 offenbart bspw. eine typische Betätigungsvorrichtung für eine Abdeckung einer Karosserieöffnung eines Kraftfahrzeugs mit einem Verriegelungszapfen, der rotatorisch und translatorisch verlagerbar ist. Am oberen Ende des Verriegelungszapfens ist ein Druckstück angeordnet, das starr ausgebildet ist und eine kugelförmige Form aufweist. Das Druckstück liegt über einen Kragen auf dem Verrieglungszapfen auf. Die Form des Druckstücks stellt eine geringe Auflagefläche bereit.

### Aufgabe

Demgegenüber besteht die Aufgabe darin eine Verriegelungseinrichtung für Tank- oder Lademulden und eine Tank- oder Lademulde anzugeben, wobei die Probleme des Stands der Technik behoben werden und ein Toleranzausgleich über einen langen Betätigungszeitraum auch bei häufiger Betätigung sichergestellt wird.

### Lösung

Die vorstehend genannte Aufgabe wird durch eine Verriegelungseinrichtung für Tank- oder Lademulden gelöst, welche einen Verriegelungsstift aufweist, der an einem Ende einen Verriegelungsabschnitt aufweist und zur Verriegelung translatorisch und rotatorisch bewegbar ist, wobei der Verriegelungsstift am Verriegelungsabschnitt ein Druckstück aufweist, und wobei das Druckstück eine zweite Aufnahme auf-weist, in der eine Feder und eine Kugel oder ein Druckstift angeordnet sind und die Kugel oder der Druckstift über die Feder gegen eine Öffnung der zweiten Aufnahme des Druck-stücks gedrückt werden.

Ein Druckstück kann auf einfache Weise einen Toleranzausgleich bereitstellen, da beispielsweise ein Hebelarm über das Druckstück auch bei häufiger Betätigung in eine Position drückbar ist. Zudem kommt es bei einem Druckstück nicht zu einem Verschleiß wie bei Weichkomponenten aus dem Stand der Technik. Daher ist auch hierüber auf lange Zeit und bei häufiger Betätigung sichergestellt, dass der Toleranzausgleich aufrechterhalten wird.

Das Druckstück weist eine zweite Aufnahme auf, in der eine Feder und eine Kugel oder ein Druckstift angeordnet sind, wobei die Kugel oder der Druckstift über die Feder gegen eine Öffnung der zweiten Aufnahme des Druckstücks gedrückt werden. Druckstücke sind in verschiedenen Ausführungen aus dem Stand der Technik bekannt. Beispielsweise kann das Druckstück der Verriegelungseinrichtung einen Druckstift aufweisen. In einer weiteren Ausführungsform weist das Druckstück der Verriegelungseinrichtung eine Kugel auf. Eine Kugel bietet den Vorteil, dass auch bei einer rotatorischen Bewegung des Verriegelungsabschnitts keine Abreibung auftreten kann. Die Kugel ist über die Öffnung sicher innerhalb der zweiten Aufnahme gehalten, kann jedoch in sämtlichen Richtungen verdreht werden. Hierüber wird auch bei einer rotatorischen Bewegung verhindert, dass die Kugel beschädigt wird. Das Druckstück unterliegt im Wesentlichen keinen Verschleißerscheinungen.

Im geöffneten Zustand einer Tankklappe eines Tank- oder Lademoduls werden die Kugel oder der Druckstift über die Feder gegen die Öffnung gedrückt, wobei die Kugel oder der Druckstift um ein bestimmbares Maß aus der Öffnung herausragen. Im geschlossenen Zustand der Tankklappe drückt diese dann über den Hebelarm gegen den Druckstift oder die Kugel, wobei die Kugel oder der Druckstift gegen die Kraft der Feder zumindest abschnittsweise in die zweite Aufnahme gedrückt werden. Die Feder ist in sämtlichen Zuständen gespannt und verhindert damit ein Klappern der Tankklappe durch den hierüber bereitgestellten Toleranzausgleich.

Der Verriegelungsstift kann am Verriegelungsabschnitt eine erste Aufnahme aufweisen, in der das Druckstück aufgenommen ist. Das Druckstück kann daher nachträglich in einen Verriegelungsabschnitt eines Verriegelungsstifts eingesetzt werden. Eine nachträgliche Bestückung bereits bestehender Verriegelungssysteme ist daher möglich. Das Druckstück kann an seiner äußeren Umfangsfläche mindestens abschnittsweise ein Gewinde aufweisen, in welche es in die erste Aufnahme einbringbar ist. Hierzu weist die erste Aufnahme einen korrespondierenden Abschnitt mit einem Innengewinde auf. Zusätzlich oder alternativ dazu kann das Druckstück einen Haftring aufweisen, der das Druckstück von außen umgibt. Über einen Haftring kann das Druckstück beispielsweise in eine die erste Aufnahme bildende Öffnung eingesetzt und sicher gehalten werden. Der Haftring kann hierzu beispielsweise aus Kunststoff, insbesondere einem gummiartigen Werkstoff, bestehen.

Das Druckstück kann zylinderförmig ausgebildet sein und einen Einstellring oder eine Einstellhülse aufweisen, welche die Öffnung aufweisen und zur Einstellung des Abstands zwischen der Öffnung und einem gegenüberliegenden Boden verlagerbar sind. Über den Einstellring oder die Einstellhülse ist es zum einen möglich, die Feder und die Kugel oder den Druckstift auszutauschen. Zum anderen ist es möglich, den Abstand zwischen der Öffnung und dem Boden zu verändern, wobei die Vorspannung der Kugel oder des Druckstifts verändert werden. Hierüber können Änderungen in den Toleranzen einer Tank- oder Lademulde Rechnung getragen werden. Der Einstellring oder die Einstellhülse sind als Aufsatzteil auf das zylinderförmige Druckstück aufgebracht und weisen hierzu ein Innengewinde und das Druckstück im Verbindungsbereich ein Außengewinde auf. In weiteren Ausführungsformen kann jedoch auch das Druckstück ein Innengewinde und der Einstellring oder die Einstellhülse ein Außengewinde aufweisen. Der Einstellring oder die Einstellhülse ermöglichen es insbesondere den Toleranzausgleich individuell einzustellen. Hierüber kann für jede Tank- oder Lademulde eine definierte Vorspannung der Kugel oder Druckstifts eingestellt werden.

Der Durchmesser der Öffnung ist dabei kleiner als der Durchmesser der Kugel oder des Druckstifts.

Das Druckstück kann dabei integraler Bestandteil des Verriegelungsstifts oder austauschbar in der ersten Aufnahme aufgenommen sein. Ist das Druckstück integraler Bestandteil des Verriegelungsstifts so kann dieses beispielsweise in einer ersten Aufnahme des Verriegelungsstifts mit ausgebildet werden. Eine austauschbare Aufnahme des Druckstücks im Verriegelungsstift ermöglicht beispielsweise einen Austausch bei Beschädigung.

Der Verriegelungsstift kann eine Führungsnut aufweisen, in die ein Führungselement eingreift. Das Führungselement kann beispielsweise Bestandteil einer Zentralverriegelungseinheit sein. Die Führungsnut erstreckt sich sowohl in Längsrichtung des Verriegelungsstifts als auch in Umfangsrichtung des Verriegelungsstifts. Hierüber wird die rotatorische und translatorische Bewegung des Verriegelungsstifts nach dessen Freigabe erreicht. Zumindest ein Abschnitt der Führungsnut kann als Herzkurvenabschnitt ausgebildet sein, sodass in einer geschlossenen Stellung einer Tank- oder Lademulde der Verriegelungsstift seine Endstellung beibehält. Der Verriegelungsstift kann zusätzlich oder alternativ einen zweiten Verriegelungsabschnitt aufweisen, von dem ein Element absteht oder ein Element in eine Öffnung eingreift. Hierüber kann ein Freigeben und Verriegeln des Verriegelungsstifts erfolgen.

Der Verriegelungsstift kann ferner gegen die Kraft einer zweiten Feder in einer dritten Aufnahme gelagert sein. Diese Feder sowie die Feder des Druckstücks können als Druckfedern ausgebildet sein und sind daher bestrebt, den Verriegelungsstift bzw. die Kugel oder den Druckstift aus den Aufnahmen herauszudrücken.

Die Kugel oder der Druckstift können aus einem Metall, insbesondere Edelstahl oder einer Edelstahllegierung oder Keramik bestehen. Die Kugel oder der Druckstift bestehen aus einem Material, welches widerstandsfähig gegenüber einem Abrieb oder einer sonstigen Beschädigung ist. Hierüber wird sichergestellt, dass der Toleranzausgleich über das Druckstück auch bei häufiger Betätigung gewährleistet wird.

Die Aufgabe wird auch durch eine Tank- oder Lademulde mit einer Verriegelungseinrichtung der vorstehend beschriebenen Varianten gelöst, die zusätzlich mindestens einen Muldenkörper, einen Hebelarm und ein Tankeinfüllrohr oder Lademodul auf-weist, wobei in einer Öffnung des Muldenkörpers ein Tankeinfüllrohr oder ein Lademodul eingesetzt sind und der Hebelarm schwenkbar gelagert ist, und wobei die Verriegelungseinrichtung so angeordnet ist, dass im geschlossenen Zustand der Tank- oder Lademulde eine Kugel oder ein Druckstift des Druckstücks über den Hebelarm in die zweite Aufnahme des Druckstücks gegen die Kraft der Feder mindestens partiell gedrückt sind.

An dem Hebelarm kann ein Tankdeckel angeordnet sein. Zusätzlich kann die Tank- oder Lademulde weitere Komponenten aufweisen. In weiteren Ausführungsformen kann die Tank- oder Lademulde sowohl ein Tankeinfüllrohr zum Einfüllen eines Kraftstoffs in einen Fahrzeugtank als auch ein Lademodul wie beispielsweise eine Ladesteckdose aufweisen. Ein Tankmodul kann beispielsweise zum Befüllen eines Kraftstofftanks mit einem flüssigen oder gasförmigen Kraftstoff vorgesehen sein. Ein Lademodul mit einer Ladesteckdose dient zur elektrischen Energieversorgung eines Fahrzeugenergiespeichers.

Im geschlossenen Zustand des Tank- oder Lademoduls wird ein Toleranzausgleich über das Druckstück bereitgestellt, sodass es zu keinem Klappern eines Tankdeckels bzw. Hebelarms in der geschlossenen Stellung kommt. Durch die Ausbildung des Druckstücks unterliegt dieses im Wesentlichen keinem Verschleiß. Hierüber wird auch bei häufiger Benutzung bzw. Betätigung des Verriegelungsstifts und Verschwenken des Hebelarms zum Verschließen der Tank- oder Lademulde ein Toleranzausgleich bereitgestellt.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

### Kurzbeschreibung der Figuren

In den Zeichnungen zeigt:
- Fig. 1: eine perspektivische Darstellung einer Zentralverriegelungseinheit einer Tank- oder Lademulde;
- Fig. 2: eine schematische Darstellung einer Verriegelungseinrichtung der Zentralverriegelungseinheit von Fig. 1;
- Fig. 3: eine schematische Schnittansicht der Verriegelungseinrichtung von Fig. 2; und
- Fig. 4: eine schematische Schnittansicht eines Druckstücks der Verriegelungseinrichtung von Fig. 2.

In den Zeichnungen mit gleichen Bezugszeichen versehene Komponenten entsprechen im Wesentlichen einander, sofern nichts anderes angegeben ist. Darüber hinaus wird darauf verzichtet, Bestandteile zu beschreiben und zu zeigen, welche nicht wesentlich zum Verständnis der hierin offenbarten technischen Lehre sind.

### Ausführliche Beschreibung eines Ausführungsbeispiels

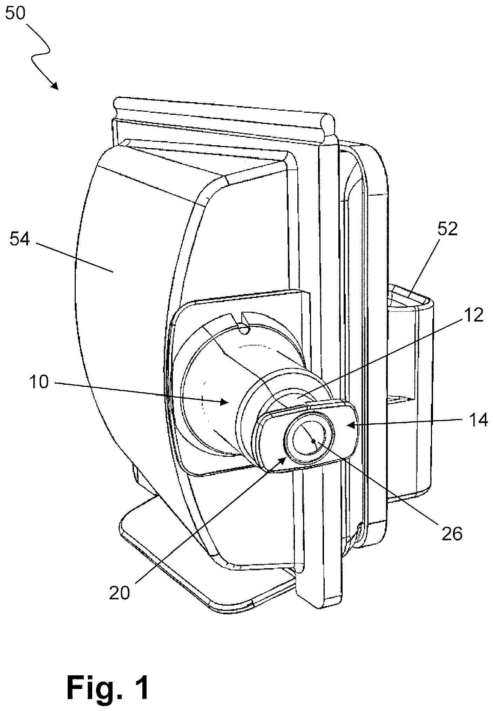

Fig. 1 zeigt eine perspektivische Darstellung einer Zentralverriegelungseinheit 50 einer Tank- oder Lademulde. Die in Fig. 1 gezeigte Zentralverriegelungseinheit 50 ist als Bestandteil einer Tank- oder Lademulde ausgebildet. Die Zentralverriegelungseinheit 50 befindet sich vorzugsweise an einem Abschnitt der Tank- oder Lademulde, der dem Abschnitt gegenüberliegt, über welchen ein Hebelarm mit einem Tankdeckel schwenkbar gelagert ist. Der Hebelarm ist über eine Federeinrichtung gespannt und wird im geschlossenen Zustand der Tank- oder Lademulde über die Zentralverriegelungseinheit 50 gehalten. Die Tank- oder Lademulde weist ein Einfüllrohr und/oder ein Lademodul mit einer Ladesteckdose auf, die in eine Öffnung eines Muldenkörpers der Tank- oder Lademulde eingesetzt sind. Über die Ladesteckdose kann ein Laden eines Energiespeichers mit elektrischem Strom erfolgen. Über ein Einfüllrohr kann flüssiger oder gasförmiger Kraftstoff zu einem Fahrzeugtank geleitet werden.

Die Tankeinrichtungen sowie die Tank- oder Lademulde mit der Zentralverriegelungseinheit 50 sind Bestandteil eines Fahrzeugs mit einem entsprechenden Antrieb. Der Antrieb umfasst beispielsweise einen Verbrennungsmotor oder einen Elektromotor. Ferner können auch sogenannte Hybridantriebe vorgesehen sein, die einen Verbrennungsmotor und einen Elektromotor aufweisen. Hybridantriebe umfassen serielle oder parallele Hybridantriebe.

Die Zentralverriegelungseinheit 50 weist ein Gehäuse 54 auf. In dem Gehäuse 54 sind eine Feder und ein Führungselement aufgenommen, über die ein End- und Verriegeln des Verriegelungsstifts 12 erfolgt. Das Freigeben des Verriegelungsstifts 12 kann beispielsweise elektrisch erfolgen, wobei hierfür ein Anschluss 52 vorgesehen ist. Die Zentralverriegelungseinheit 50 befindet sich an einem Wandabschnitt des Muldenkörpers.

Die Ausbildung einer Zentralverriegelungseinheit 50 ist in verschiedenen Ausführungen aus dem Stand der Technik bekannt. Wesentliches Merkmal einer Zentralverriegelungseinheit 50 ist das Verriegeln eines Hebelarms bzw. Tankdeckels im geschlossenen Zustand der Tank- oder Lademulde und das Freigeben des Hebelarms bzw. des Tankdeckels durch Verdrehen des Verriegelungsstifts 12, welcher an seinem vorderen Ende einen Verriegelungsabschnitt 14 aufweist. Der Verriegelungsstift 12 ist Teil einer Verriegelungseinrichtung 10, welche wiederum Bestandteil der Zentralverriegelungseinheit 50 ist.

In dem in Fig. 1 gezeigten Ausführungsbeispiel weist die Verriegelungseinrichtung 10 ein Druckstück 20 auf. Das Druckstück 20 ist im Verriegelungsabschnitt 14 angeordnet und weist eine Kugel 26 auf. Die Kugel 26 wird über eine Feder 24 aus einer zweiten Aufnahme 22 herausgedrückt, wobei die Kugel 26 über eine Öffnung 28 gegen ein Herausfallen gesichert ist.

Das Druckstück 20 dient als Toleranzausgleichselement, wodurch es im geschlossenen Zustand der Tank- oder Lademulde zu keinem Klappern eines Hebelarms oder einer Tankklappe kommt. Herkömmliche Systeme aus dem Stand der Technik weisen zum Ausgleich von Toleranzen ein federndes Endstück an einem Verriegelungsstift auf, das aus einer Weichkomponente besteht. Aufgrund der rotatorischen und translatorischen Bewegung des Verriegelungsstifts kommt es zu einem Abrieb der Weichkomponente. Hierüber wird der Toleranzausgleich nicht mehr gewährleistet und es kommt zu einem Klappern der Tancklappe bzw. des Hebelarms.

Die hierin beschriebene Verriegelungseinrichtung 10 unterliegt im Wesentlichen keinem Verschleiß und stellt daher auch bei einer häufigen Betätigung einen Toleranzausgleich zur Verfügung, der beispielsweise ein Klappern einer Tankklappe oder eines Hebelarms verhindert.

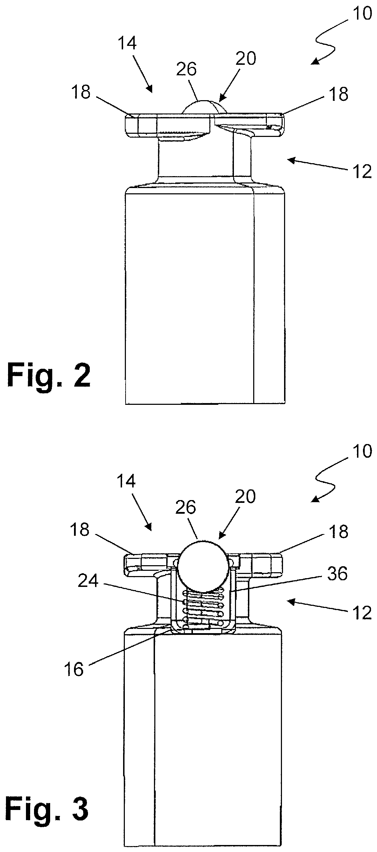

Fig. 2 zeigt eine schematische Darstellung einer Verriegelungseinrichtung 10 der Zentralverriegelungseinheit 50 von Fig. 1. In Fig. 1 ist der Verriegelungsstift 12 mit einem darin aufgenommenen Druckstück 20 in Seitenansicht gezeigt. Der Verriegelungsstift 12 weist im Verriegelungsabschnitt 14 zwei abstehende Flügel 18 auf. Bei einer Verlagerung des Verriegelungsstifts 12 werden die Flügel 18 gemeinsam mit dem Verriegelungsstift 12 entlang dessen Längsachse bewegt als auch um die Längsachse verdreht. Hierüber kommt es zu einem Freigeben bzw. Verriegeln des Hebelarms einer Tankklappe.

In dem in Fig. 2 gezeigten Zustand ragt die Kugel 26 um ein bestimmtes Maß aus einer zweiten Aufnahme 22 hervor. Der in Fig. 2 gezeigte Zustand zeigt den entriegelten Zustand.

Fig. 3 zeigt eine schematische Schnittansicht der Verriegelungseinrichtung 10 von Fig. 2. In Fig. 3 ist ebenfalls der entriegelte Zustand gezeigt. Im verriegelten Zustand wird über den Hebelarm einer Tankklappe die Kugel 26 gegen die Kraft einer Feder 24 in die zweite Aufnahme 22 hineingedrückt. Da die Feder 24 als Druckfeder bestrebt ist die Kugel 26 wieder in die den Fig. 2 und 3 gezeigte Ausgangsstellung zurück zu drücken, wird ein Spiel des Hebelarms, der mit der Kugel 26 in Kontakt steht, verhindert. Der Hebelarm kann daher nicht klappern. Der Hebelarm der Tankklappe wird über die Flügel 28 sicher gehalten. Ein geringes Spiel trotz der Verriegelung über die Flügel 18 wird über das Druckstück 20 in der vorstehend beschriebenen Weise ausgeglichen. Das Druckstück 20 dient damit als Toleranzausgleich und verhindert, dass es beispielsweise zu Klappergeräuschen während einer Fahrt kommt.

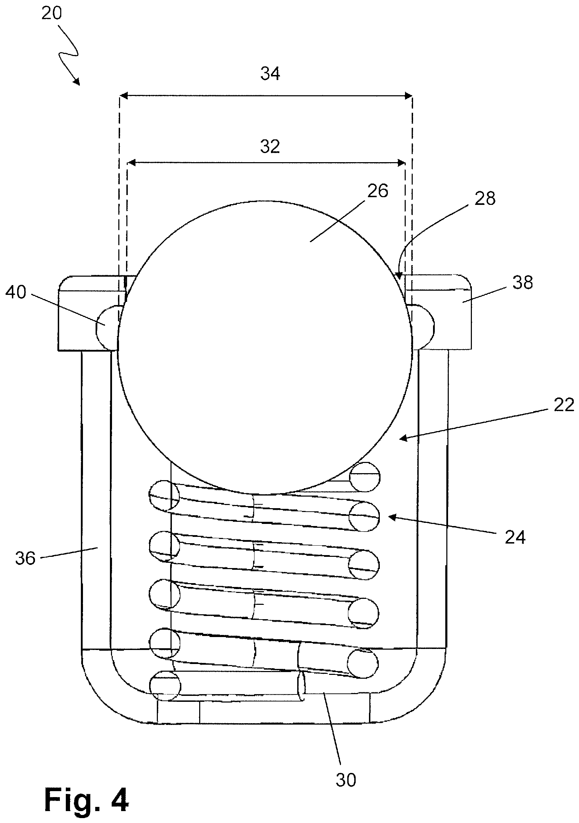

Fig. 4 zeigt eine schematische Schnittansicht eines Druckstücks 20 der Verriegelungseinrichtung 10 von Fig. 2. Das Druckstück 20 weist ein Gehäuse 36 auf, welches in eine erste Aufnahme 16 im Verriegelungsabschnitt 14 eingesetzt wird. Das Gehäuse 36 des Druckstücks 20 kann in der ersten Aufnahme 16 durch eine Presspassung sicher gehalten werden. Zusätzlich kann das Druckstück 20 an der äußeren Umfangsfläche des Gehäuses 36 einen Haftring aufweisen, der das Gehäuse 36 zusätzlich innerhalb der ersten Aufnahme sicher hält und ein Herausrutschen verhindert. In weiteren Ausführungsformen weist das Gehäuse 36 an seinem äußeren Umfang abschnittsweise ein Gewinde auf, das mit einem korrespondierenden Gewinde der ersten Aufnahme 16 ein Einschrauben des Druckstücks 20 in die erste Aufnahme 16 ermöglicht.

Die Feder 24 stützt sich gegen den Boden 30 in der zweiten Aufnahme 22 ab. Das gegenüberliegende Ende der Feder 24 stützt sich an der Kugel 26 ab. Die Kugel 26 weist einen größeren Durchmesser 34 auf als der Durchmesser 32 der Öffnung 28 in einem Ring 38 des Druckstücks 20. Im Bereich der Öffnung 28 befindet sich zusätzlich eine Nut 40, dessen unterer Durchmesser größer als der Durchmesser 32 der Öffnung 28 ist. Die Kugel 26 kann daher wie in Fig. 4 gezeigt aus der Öffnung 28 hervorragen.

Fig. 4 zeigt einen entriegelten Zustand. Im verriegelten Zustand wird die Kugel 26 über den Hebelarm in die Aufnahme 22 gedrückt. Die Ausbildung des Druckstücks 20 mit einer Kugel 26 erlaubt es insbesondere, dass die Kugel 26 aufgrund der translatorischen und rotatorischen Bewegung des Verriegelungsstifts 12 verdreht werden kann, ohne dass es zu einem abrieb kommt. Die Kugel 26 besteht hierzu aus einem Metall, insbesondere Edelstahl oder einer Edelstahllegierung. In weiteren Ausführungsformen kann die Kugel 26 auch aus einer Keramik bestehen.

An dem Gehäuse 36 befindet sich zusätzlich der Ring 38, welcher in weiteren Ausführungsformen als Einstellring mit einem Innengewinde ausgebildet sein kann. Das Gehäuse 36 weist im oberen Bereich ein korrespondierendes Gewinde auf. Über den Einstellring 38 ist es möglich, den Abstand der Kugel 26 zu dem Boden 30 des Gehäuses 36 zu verändern. Hierüber kann eine veränderte Vorspannung der Kugel 26 erreicht werden. Zudem ist es hierüber möglich, das Druckstück 20 an verschiedene Toleranzen bei einer Tank- oder Lademulde anzupassen. Weiterhin erlaubt die Ausbildung des Rings 38 als Einstellring in weiteren Ausführungen ein Entfernen des Rings 38, sodass sowohl die Kugel 26 als auch die Feder 30 ausgetauscht oder die zweite Aufnahme 22 gereinigt werden können.

Herkömmliche Systeme aus dem Stand der Technik weisen Dämpfungsglieder zum Ausgleich von Toleranzen auf, welche aufgrund der rotatorischen und translatorischen Bewegung einem hohen Verschleiß ausgesetzt sind. Eine Kugel 26 aus Keramik oder einem Metall unterliegt keinem solchen Verschleiß und lässt sogar eine Verdrehung zu. Hierüber wird ein Toleranzausgleich bereitgestellt, der langlebig ausgebildet ist und im Wesentlichen keinem Verschleiß unterliegt. Zudem kommt es auch bei hohen Temperaturen nicht zu einem Verschmelzen von Weichkomponenten, wie dies beispielsweise im Stand der Technik auftreten kann. Ferner ist eine Kugel 26 aus einer Keramik oder einem Metall widerstandfähig gegenüber Kraftstoffen und Kraftstoffdämpfen. Die Kugel 26 kann daher nicht durch Kraftstoffe oder Dämpfe zersetzt werden.

In weiteren Ausführungsformen kann die Zentralverriegelungseinheit 50 eine Notentriegelung aufweisen, die ein Verdrehen des Verriegelungsstifts 12 über einen Seilzug ermöglicht. Hierüber wird sichergestellt, dass es zu einer Entriegelung kommt, wenn beispielsweise die elektrischen Komponenten ausfallen.

Die Betätigung eines Verriegelungsstifts 12 mit einer Kulissenführung für die rotatorische und translatorische Bewegung, wobei ein Verdrehen des Verriegelungsabschnitts 14 auftritt, ist aus dem Stand der Technik in verschiedenen Ausführungen bekannt. Zum Auslösen einer Entriegelung und zum Verriegeln wird entsprechend hierauf verwiesen.

### Bezugszeichenliste

- 10: Verriegelungseinrichtung
- 12: Verriegelungsstift
- 14: Verriegelungsabschnitt
- 16: erste Aufnahme
- 18: Flügel
- 20: Druckstück
- 22: zweite Aufnahme
- 24: Feder
- 26: Kugel
- 28: Öffnung
- 30: Boden
- 32: Durchmesser
- 34: Durchmesser
- 36: Gehäuse
- 38: Ring
- 40: Nut
- 50: Zentralverriegelungseinheit
- 52: Anschluss
- 54: Gehäuse

## Patentansprüche

1. Verriegelungseinrichtung für Tank- oder Lademulden, mit einem Verriegelungsstift (12), der an einem Ende einen Verriegelungsabschnitt (14) aufweist und zur Verriegelung translatorisch und rotatorisch bewegbar ist, wobei der Verriegelungsstift (12) am Verriegelungsabschnitt (14) ein Druckstück (20) aufweist, wobei das Druckstück (20) eine zweite Aufnahme (22) aufweist, in der eine Feder (24) und eine Kugel (26) oder ein Druckstift angeordnet sind und die Kugel (26) oder der Druckstift über die Feder (24) gegen eine Öffnung (28) der zweiten Aufnahme (22) des Druckstücks (20) gedrückt werden.

2. Verriegelungseinrichtung nach Anspruch 1, wobei der Verriegelungsstift (12) am Verriegelungsabschnitt (14) eine erste Aufnahme (16) aufweist, in der das Druckstück (20) aufgenommen ist.

3. Verriegelungseinrichtung nach Anspruch 1 oder 2, wobei das Druckstück (20) zylinderförmig ausgebildet ist und einen Einstellring oder eine Einstellhülse aufweist, welche die Öffnung (28) aufweisen und zur Einstellung des Abstands zwischen der Öffnung (28) und einem gegenüberliegenden Boden (30) verlagerbar sind.

4. Verriegelungseinrichtung nach einem der Ansprüche 1 bis 3, wobei der Durchmesser (32) der Öffnung (28) kleiner als der Durchmesser (34) der Kugel (26) oder des Druckstifts ist.

5. Verriegelungseinrichtung nach einem der Ansprüche 1 bis 4, wobei das Druckstück (20) integraler Bestandteil des Verriegelungsstifts (12) oder austauschbar in der ersten Aufnahme (16) aufgenommen ist.

6. Verriegelungseinrichtung nach einem der Ansprüche 1 bis 5, wobei der Verriegelungsstift (12) eine Führungsnut aufweist, in die ein Führungselement eingreift.

7. Verriegelungseinrichtung nach Anspruch 6, wobei der Verriegelungsstift (12) gegen die Kraft einer zweiten Feder in einer dritten Aufnahme gelagert ist.

8. Verriegelungseinrichtung nach einem der Ansprüche 1 bis 7, wobei die Kugel (26) oder der Druckstift aus Edelstahl, einer Edelstahllegierung oder Keramik bestehen.

9. Tank- oder Lademulde mit mindestens einer Verriegelungseinrichtung (10) nach einem der Ansprüche 1 bis 8, einem Muldenkörper, einem Hebelarm und einem Tankeinfüllrohr oder Lademodul, wobei in einer Öffnung des Muldenkörpers das Tankeinfüllrohr oder das Lademodul eingesetzt sind und der Hebelarm schwenkbar gelagert ist, und wobei die Verriegelungseinrichtung (10) so angeordnet ist, dass im geschlossenen Zustand der Tank- oder Lademulde die Kugel (26) oder der Druckstift des Druckstücks (20) über den Hebelarm in die zweite Aufnahme (22) des Druckstücks (20) gegen die Kraft der Feder (24) mindestens partiell gedrückt sind.

## Claims

1. Locking device for fuel inlets or charging bays, with a locking pin (12) which comprises a locking section (14) at one end and is translationally and rotationally movable for locking, wherein the locking pin (12) comprises a push piece (20) at the locking section (14), wherein the push piece (20) comprises a second receptacle (22) in which a spring (24) and a ball (26) or a push pin are arranged and the ball (26) or the push pin is pressed via the spring (24) against an opening (28) of the second receptacle (22) of the push piece (20).

2. Locking device according to claim 1, wherein the locking pin (12) comprises a first receptacle (16) at the locking section (14) in which the push piece (20) is accommodated.

3. Locking device according to claim 1 or 2, wherein the push piece (20) is formed cylindrically and has an adjustment ring or an adjustment sleeve which comprise the opening (28) and are displaceable for adjusting the distance between the opening (28) and an opposite bottom (30).

4. Locking device according to one of the claims 1 to 3,
wherein the diameter (32) of the opening (28) is smaller than the diameter of the ball (26) or the push pin.

5. Locking device according to one of claims 1 to 4, wherein the push piece (20) is an integral part of the locking pin (12) or is interchangeably accommodated in the first receptacle (16).

6. Locking device according to one of the claims 1 to 5,
wherein the locking pin (12) has a guide groove in which a guide element engages.

7. Locking device according to claim 6, wherein the locking pin (12) is mounted against the force of a second spring in a third receptacle.

8. Locking device according to one of the claims 1 to 7,
wherein the ball (26) or the push pin is made of stainless steel, a stainless steel alloy or ceramic.

9. Fuel inlet or charging bay with at least one locking device (10) according to one of the claims 1 to 8, a trough body, a lever arm and a tank filling pipe or charging module, wherein the tank filling pipe or the charging module is inserted in an opening of the trough body and the lever arm is pivotably mounted, and wherein the locking device (10) is arranged in such a way that, in the closed state of the fuel inlet or charging bay, the ball (26) or the push pin of the push piece (20) is at least partially pressed via the lever arm into the second receptacle (22) of the push piece (20) against the force of the spring (24).

## Revendications

1. Dispositif de verrouillage pour des berceaux de réservoir ou de chargement, avec une tige de verrouillage (12) qui présente à une extrémité une section de verrouillage (14) et peut être déplacée en translation et en rotation pour le verrouillage, dans lequel la tige de verrouillage (12) présente une pièce de pression (20) au niveau de la section de verrouillage (14), dans lequel la pièce de pression (20) présente un deuxième logement (22) dans laquelle un ressort (24) et une bille (26) ou une tige de pression sont agencés et la bille (26) ou la tige de pression sont poussées via le ressort (24) contre une ouverture (28) du deuxième logement (22) de la pièce de pression (20).

2. Dispositif de verrouillage selon la revendication 1, dans lequel la tige de verrouillage (12) présente au niveau de la section de verrouillage (14) un premier logement (16) dans lequel la pièce de pression (20) est logée.

3. Dispositif de verrouillage selon la revendication 1 ou 2, dans lequel la pièce de pression (20) est conçue en forme de cylindre et présente une bague de réglage ou une douille de réglage qui présentent l'ouverture (28) et peuvent être déplacées pour le réglage de la distance entre l'ouverture (28) et un fond (30) opposé.

4. Dispositif de verrouillage selon l'une des revendications 1 à 3, dans lequel le diamètre (32) de l'ouverture (28) est inférieur au diamètre (34) de la bille (26) ou de la tige de pression.

5. Dispositif de verrouillage selon l'une des revendications 1 à 4, dans lequel la pièce de pression (20) fait partie intégrante de la tige de verrouillage (12) ou est logée de façon interchangeable dans le premier logement (16).

6. Dispositif de verrouillage selon l'une des revendications 1 à 5, dans lequel la tige de verrouillage (12) présente une rainure de guidage dans laquelle s'engage un élément de guidage.

7. Dispositif de verrouillage selon la revendication 6, dans lequel la tige de verrouillage (12) est montée contre la force d'un second ressort dans un troisième logement.

8. Dispositif de verrouillage selon l'une des revendications 1 à 7, dans lequel la bille (26) ou la tige de pression sont en acier inoxydable, en un alliage d'acier inoxydable ou en céramique.

9. Berceau de réservoir ou de chargement avec au moins un dispositif de verrouillage (10) selon l'une des revendications 1 à 8, un corps de berceau, un bras de levier et un tube de remplissage ou un module de chargement, dans lequel le tube de remplissage de réservoir ou le module de chargement sont insérés dans une ouverture du corps de berceau et le bras de levier est monté en pivotement, et dans lequel le dispositif de verrouillage (10) est agencé de telle sorte qu'à l'état fermé du berceau de réservoir ou de chargement la bille (26) ou la tige de pression de la pièce de pression (20) soient au moins partiellement poussées via le bras de levier jusque dans le deuxième logement (22) de la pièce de pression (20) contre la force du ressort (24).
